# EUROPÄISCHE PATENTSCHRIFT

(11) **EP 3 741 443 B1**
(45) Veröffentlichungstag und Bekanntmachung des Hinweises auf die Patenterteilung: **04.10.2023**
(21) Anmeldenummer: 20169881.8
(22) Anmeldetag: 17.06.2015
(51) Int. Cl.: B01D 46/42

(54) **FILTEREINSATZ**
FILTER INSERT
INSERT DE FILTRE

(30) Priorität: 18.06.2014 DE 202014004894 U; 18.06.2014 DE 202014004897 U; 11.11.2014 DE 202014008899 U
(43) Veröffentlichungstag der Anmeldung: 25.11.2020
(62) Teilanmeldung aus: 15729483.6
(73) Patentinhaber: MANN+HUMMEL GmbH, 71636 Ludwigsburg (DE)
(72) Erfinder: Kaufmann, Michael, 67149 Meckenheim (DE); Ruhland, Klaus-Dieter, 67149 Meckenheim (DE)
(74) Vertreter: Mann + Hummel Intellectual Property

(56) Entgegenhaltungen:
- WO-A1-2009/106593
- WO-A1-2010/114906
- DE-A1-102005 031 058
- DE-A1-102009 060 214
- DE-U1- 8 808 632
- US-A1- 2008 307 759
- US-A1- 2010 043 366
- US-A1- 2011 011 782
- US-A1- 2014 130 467
- US-B1- 6 200 465

## Beschreibung

### Technisches Gebiet

Die vorliegende Erfindung betrifft einen Filtereinsatz, insbesondere für einen Filter, insbesondere für Brennkraftmaschinen, zur Filterung eines Fluids, insbesondere von Luft.

### Stand der Technik

Es zeigen WO 2009/106593 A1 eine Luftfilteranordnung mit einem Filterelement und einem Sicherheitsfilterelement, US 2014/130467 A1 eine Filteranordnung mit einem Primär- und Sekundärfilterelement und DE 10 2009 060 214 A1 ein Filterelement und ein Herstellungsverfahren. Insbesondere bei Bau- und Landmaschinen gewinnt die Motorluftfiltration zunehmend an Bedeutung. Zum einen werden immer leistungsfähigere Luftfilter eingesetzt, da höhere Motorleistungen und strengere Emissionsrichtlinien einen erhöhten Luftdurchsatz durch den Motor erfordern. Zum anderen vergrößert sich die Anzahl an Baugruppen, die standardmäßig verbaut werden, wie etwa Klimaanlagen. Dies verringert den zur Verfügung stehenden Bauraum im Fahrzeug. Schließlich besteht das Bestreben, Fahrzeuge kleiner und leichter zu gestalten, was ebenfalls zu Lasten des zur Verfügung stehenden Bauraums geht.

Bei der immer höher werdenden Integration ist eine besonders hohe Zuverlässigkeit jedes Bauteils eines solchen Filters für lange Wartungsintervalle von Bedeutung. Bei den genannten Einsatzbereichen erfordern neben den hohen Fluiddurchsätzen auch hohe mechanische Beanspruchungen wie beispielsweise durch Vibrationen eine besonders stabile Bauweise des Gesamtsystems.

Es ist eine Aufgabe der Erfindung, einen Filtereinsatz, insbesondere ein Sekundärelement anzugeben, der durch eine robuste Bauweise eine besonders hohe Zuverlässigkeit aufweist.

Neben den äußeren Abmessungen eines Luftfilters, dem maximal möglichen Luftdurchsatz und der Standzeit eines Filters ist der durch den Luftfilter hervorgerufene Druckabfall eine entscheidende Kerngröße bei der Beurteilung der Leistungsfähigkeit eines Luftfilters.

Es ist eine weitere Aufgabe der Erfindung, den Druckabfall eines Filtereinsatzes für einen Filter bei gegebener Außengeometrie so gering wie möglich zu gestalten.

Die oben genannten Aufgaben werden jeweils durch verschiedene Aspekte der im Folgenden beschriebenen Ausführungsformen eines Filters, insbesondere für Brennkraftmaschinen, zur Filterung eines Fluids, insbesondere von Luft, sowie eines Filtereinsatzes, insbesondere für einen solchen Filter, gelöst. Die verschiedenen Aspekte können wie aus den Ausführungsbeispielen ersichtlich einzeln oder kombiniert vorteilhaft in Ausführungsformen enthalten sein, wobei bei Kombination einzelne Aspekte die Vorteile anderer Aspekte unterstützen und ein synergistisches Zusammenwirken zu einem vorteilhaften Produkt führt.

### Offenbarung der Erfindung

Die Aufgabe wird durch einen Filtereinsatz, insbesondere Sekundärfiltereinsatz für einen Filter zur Filterung eines Fluids, insbesondere von Luft, insbesondere für eine Brennkraftmaschine gemäß Anspruch 1 gelöst. Weitere Ausgestaltungen der Erfindung sind in den Unteransprüchen angegeben.

Der erfindungsgemäße Sekundärfiltereinsatz ist dazu ausgelegt, stromabwärts eines Hauptfiltereinsatzes in einen Filter eingesetzt zu werden. Er weist eine Anströmfläche, eine Abströmfläche und eine Abströmungsrichtung auf. Ferner weist der Sekundärfiltereinsatz einen Filterkörper, der entlang der Abströmungsrichtung durchströmbar ist, und einen den Filterkörper tragenden Filtereinsatzrahmen auf. Der Filtereinsatzrahmen weist eine Dichtung zur Trennung eines Filterinnenraums eines Filters in Reinseite und Rohseite als auch eine Verklebung zwischen dem Filterkörper und dem Filtereinsatzrahmen auf. Das separate Ausführen von Dichtung und Verklebung erlaubt eine wesentlich stabilere Ausgestaltung der Verklebung.

Bei einer bevorzugten Ausgestaltung der Erfindung ist die Dichtung radial zur Hauptströmungsrichtung wirkend ausgelegt und läuft insbesondere im Wesentlichen senkrecht zur Hauptströmungsrichtung um den Sekundärfiltereinsatz um. Die Dichtung kann ein Moosgummi aufweisen.

Erfindungsgemäß ist vorgesehen, dass ein Trägerabschnitt des Filtereinsatzrahmens um den Filterkörper umläuft und der Trägerabschnitt an der Innenseite eine Nut aufweist, in welcher ein Klebematerial der Verklebung aufgenommen ist. Dies ermöglicht eine mechanisch besonders stabile Verbindung zwischen dem Filterkörper und dem Filtereinsatzrahmen. Erfindungsgemäß ist vorgesehen, dass die Tiefe der Nut in Richtung der Hauptströmungsrichtung verläuft.

Bei einer Weiterbildung der Erfindung umläuft ein Dichtungsaufnahmeabschnitt des Filtereinsatzrahmens außen den Filterkörper. Insbesondere bei der Entnahme und dem Einbau des Sekundärfiltereinsatzes werden auf die Dichtung ausgeübte Scherkräfte durch den Dichtungsaufnahmeabschnitt aufgenommen.

Eine Ausführungsform sieht vor, dass die Verklebung ein Polyurethan aufweist und insbesondere geschäumt ist. Insbesondere kann die Verklebung den Filterkörper teilweise durchdringen und so für eine besonders feste Verklebung zwischen Filterkörper und Filtereinsatzrahmen sorgen.

Bei einer Weiterbildung der Erfindung kann vorgesehen sein, dass der Filtereinsatzrahmen abströmseitig ein die Abströmfläche überdeckendes Gitter aufweist. Dies erhöht bei hohen Differenzdrücken die Kollapsfestigkeit des Sekundärfiltereinsatzes. Insbesondere kann das Gitter einteilig mit dem Filtereinsatzrahmen ausgebildet sein.

In einer Ausführungsform des Filtereinsatzes, insbesondere Sekundärfiltereinsatzes, ist vorgesehen, dass der Filtereinsatzrahmen einen Griffbereich aufweist, der so ausgelegt ist, dass eine Anströmung des Filterkörpers über den Griffbereich und eine manuelle Entnahme des Filtereinsatzes möglich ist. Auf diese Weise wird der Bereich vergrößert, über den der Filterkörper angeströmt werden kann. Nachdem in der Regel ohnehin eine Möglichkeit zur manuellen Handhabung des Filtereinsatzes, insbesondere bei Einbau und Ausbau des Filtereinsatzes, vorzusehen ist, wird durch die Auslegung des Griffbereichs für ein Durchströmen des zu filternden Fluids der durch den Filtereinsatz hervorgerufene Druckabfall oder Druckverlust signifikant verringert.

Bei einer bevorzugten Weiterentwicklung der Erfindung ist vorgesehen, dass seitlich zu der Hauptanströmfläche eine Nebenanströmfläche vorgesehen ist. Dies erschließt der generell verbesserten Anströmsituation des Filtereinsatzes eine weitere Anströmfläche des Filtereinsatzes und reduziert somit den Druckverlust durch den Filtereinsatz weiter. Dabei kann insbesondere vorgesehen sein, dass der Griffbereich ein Anströmen des Filterkörpers seitlich neben der Hauptanströmfläche ermöglicht.

Bevorzugt ist der Griffbereich als Griffmulde ausgebildet, und die Griffmulde zeigt zu dem Filterkörper. Zum einen bietet die Griffmulde eine besonders einfache Möglichkeit, den Filtereinsatz aus seiner eingesetzten Position herauszunehmen. Andererseits ermöglicht die Form einer Mulde eine besonders verwirbelungsfreie Zuströmung des Fluids zu dem Filterkörper, insbesondere zu der Hauptanströmfläche und der Nebenanströmfläche.

Bei einer Ausgestaltung der Erfindung ist vorgesehen, dass in Hauptströmungsrichtung der Griffbereich im Wesentlichen nicht über die Anströmfläche hinaus ragt. Ebenfalls kann der Filterkörper im Wesentlichen quaderförmig ausgebildet sein.

Bei der weiteren Ausgestaltung ist der Filterkörper als zickzackförmig gefalteter Filterbalg ausgebildet und insbesondere eine der Stirnseiten der Filterbalgfalten (d.h. die durch den zickzackförmigen Verlauf des gefalteten Filtermediums gebildeten Seitenflächen) zeigen in Richtung des Griffbereichs. Durch die erfindungsgemäße Ausgestaltung des Griffbereichs, der zu dieser Stirnseite offen ist, wird das strömende Fluid den Stirnseiten der Filterbalgfalten zugeleitet. Bei einer einseitigen Abdichtung der Stirnseiten nur auf der Reinseite des gefalteten Filtermediums bleibt die Stirnseite teilweise an den rohseitigen, nicht verklebten Spalten zwischen den Falten offen. So kann das Fluid an der Stirnseite in das Innere des Filterbalgs gelangen, ohne dass ein Umströmen des Filterkörpers auftritt. Auf diese Weise kann neben der regulären Hauptanströmfläche, welche durch die Faltkanten gebildet wird, die Stirnseite des Filterbalgs als Nebenanströmfläche dienen und damit den Druckverlust minimieren.

Bei einer besonders bevorzugten Ausführungsform der Erfindung ist der Filtereinsatz als Sekundärfiltereinsatz ausgelegt. Da insbesondere der im nach dem Hauptfiltereinsatz gelegene Bauraum besonders knapp bemessen ist und nicht immer eine zu der gesamten Abströmfläche des Hauptfiltereinsatzes äquivalente Anströmfläche an dem Sekundärfiltereinsatz realisieren lässt, ist eine zusätzliche Nebenanströmfläche von besonders hoher Bedeutung für die Optimierung des gesamten Filtersystems.

Bei einer erfindungsgemäßen Weiterbildung der Erfindung ist vorgesehen, dass der Filtereinsatzrahmen abströmseitig ein die Abströmfläche überdeckendes Gitter aufweist. Insbesondere bei hohen Druckdifferenzen oder bei einem Wechsel des Hauptfilterelements im Betrieb ist ein besonders hoher Kollapsdruck eines Sekundärfiltereinsatzes wichtig. Diese wird durch das Vorsehen eines abströmseitigen Gitters entscheidend verbessert.

Das Gitter kann bevorzugt einteilig mit dem Filtereinsatzrahmen ausgebildet sein.

### Kurze Beschreibung der Zeichnungen

Die Erfindung wird unter Bezugnahme auf die Zeichnungen näher erläutert. Es zeigen:
- Figur 1: eine perspektivische Schnittansicht einer Ausführungsform eines Filters mit eingesetztem Hauptfiltereinsatz und Sekundärfiltereinsatz;
- Figur 2: den Filter der Figur 1 ohne eingesetztem Sekundärfiltereinsatz;
- Figur 3: den Filter der Figur 1 ohne eingesetztem Hauptfiltereinsatz;
- Figur 4: den Filter der Figur 1 in einer Querschnittsansicht;
- Figur 5: eine perspektivische Außenansicht des erfindungsgemäßen Filters der Figur 1;
- Figur 6: eine perspektivische Ansicht eines erfindungsgemäßen Sekundärfiltereinsatzes mit Filterkörper;
- Figur 6a: eine perspektivische Ansicht eines alternativen erfindungsgemäßen Sekundärfiltereinsatz-Filterkörpers;
- Fig. 7, 8: perspektivische Ansichten des Sekundärfiltereinsatzes der Figur 6 ohne Filterkörper;
- Figur 9: eine perspektivische Schnittansicht des Filters der Figur 6;
- Figur 10: eine Schnittansicht des Filters der Figur 7;
- Figur 11: eine perspektivische Vorderansicht eines Hauptfiltereinsatzes;
- Figur 12: eine perspektivische Rückansicht des Hauptfiltereinsatzes der Figur 11;
- Figur 13: eine perspektivische Schnittansicht des Hauptfiltereinsatzes der Figur 11;
- Figur 14: eine perspektivische Rückansicht des Hauptfiltereinsatzes der Figur 11 ohne Kantenschutz;
- Fig. 15, 16: perspektivische Außenansicht des Filters der Figur 5 mit unterschiedlichen Stellungen des Abströmstutzens;
- Figur 17: eine Seitenansicht des Filters der Figur 5;
- Figur 18: eine Seitenansicht des Filters der Figur 15; und
- Figur 19: eine Seitenansicht des Filters der Figur 16.

### Ausführungsform(en) der Erfindung

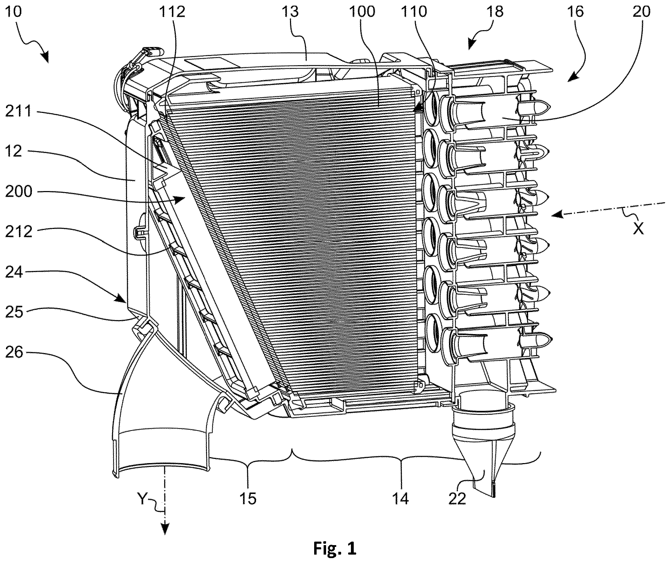

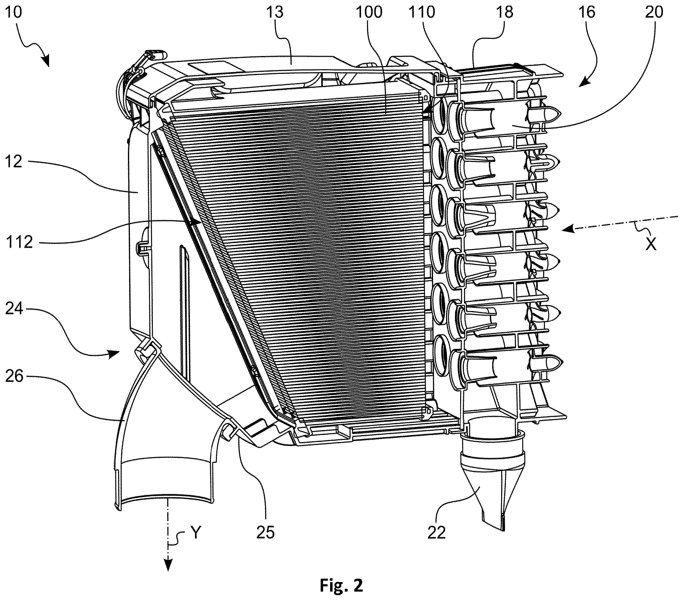

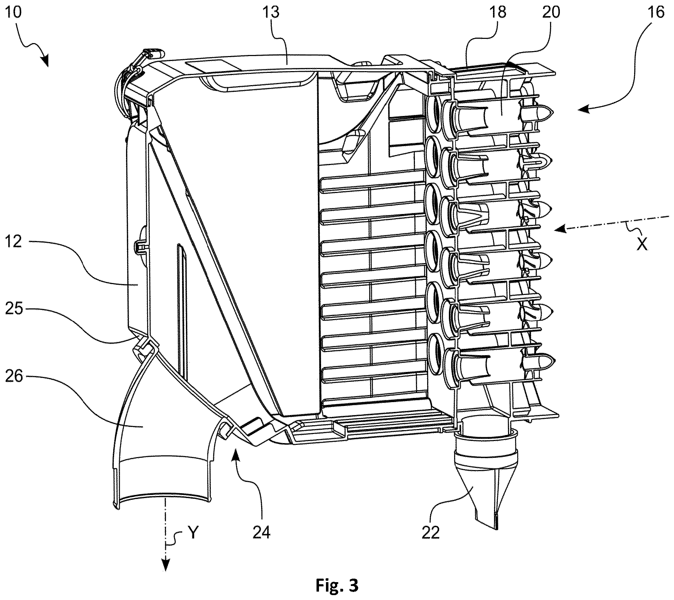

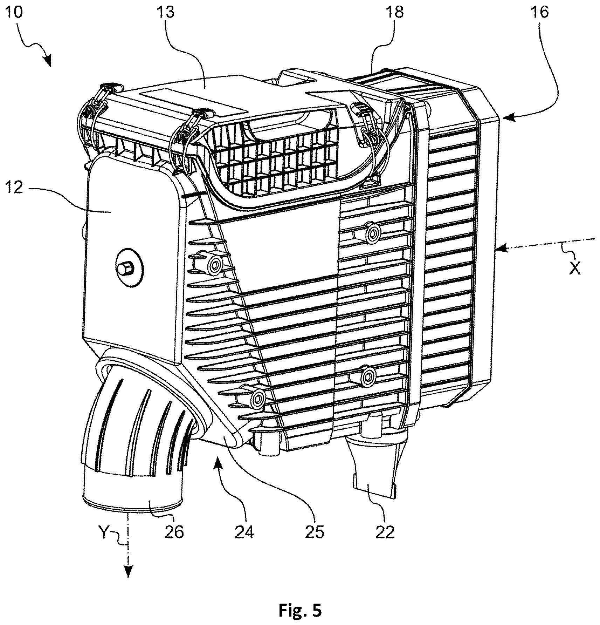

Es wird nun unter Bezugnahme auf die Figuren 1 bis 5 eine Ausführungsform eines Filters 10 beschrieben. Ein solcher Filter 10 kann beispielsweise in einem Luftansaugtrakt einer Bau- oder Landmaschine, eines Kompressors oder sonstigen Geräts mit einer Brennkraftmaschine zur Filterung eines Fluids, insbesondere von Luft, eingesetzt werden. Der Filter 10 weist ein Filtergehäuse 12 auf, das sich grob in einen rohseitigen Bereich 14 und einen reinseitigen Bereich 16 aufgliedern lässt.

Der Filter 100 wird entlang einer Hauptanströmrichtung X durchströmt. Auf einer Anströmseite 16 trifft das zu filternde Fluid auf ein Grob- oder Vorabscheidermodul 18, das vorliegend als Zyklonblock ausgebildet ist. In dem Zyklonblock 18 sind eine Vielzahl einzelner Vorabscheiderzellen 20 in einem sog. Multi-Zyklonblock parallel geschaltet. In dem Zyklonblock 18 wird vorabgeschiedener Staub und/oder Wasser durch einen Austragsstutzen 22 aus dem Filtergehäuse 12 entfernt.

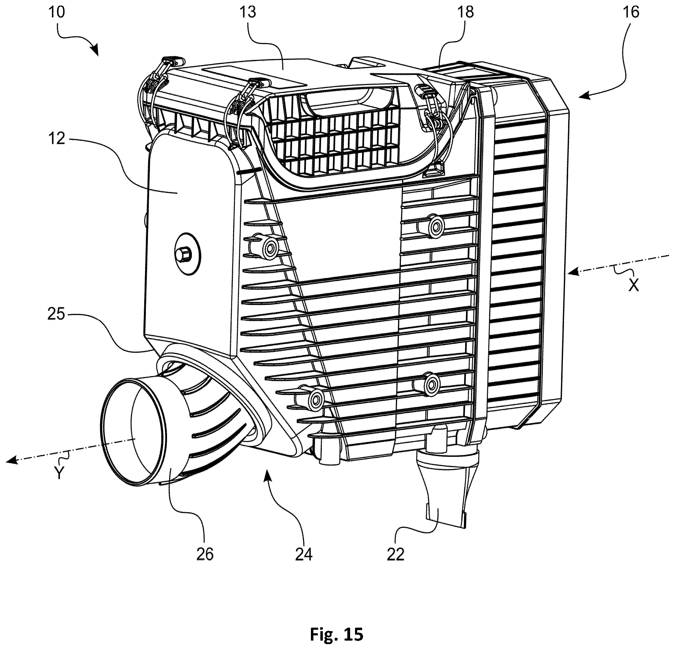

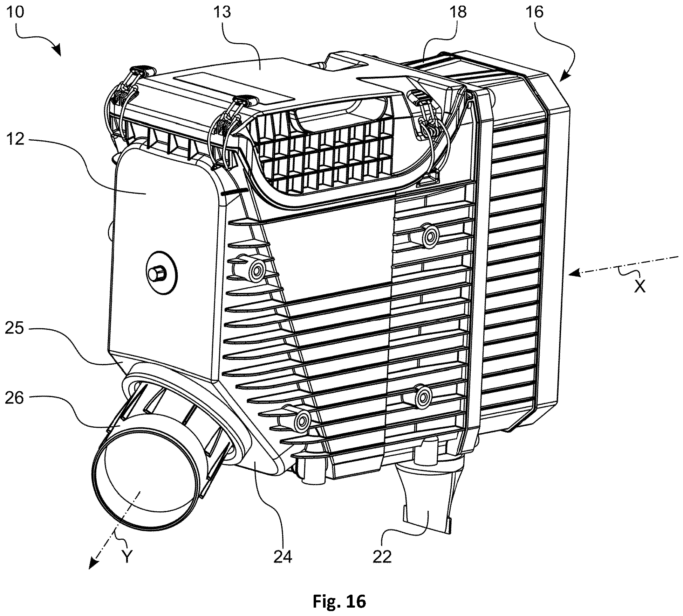

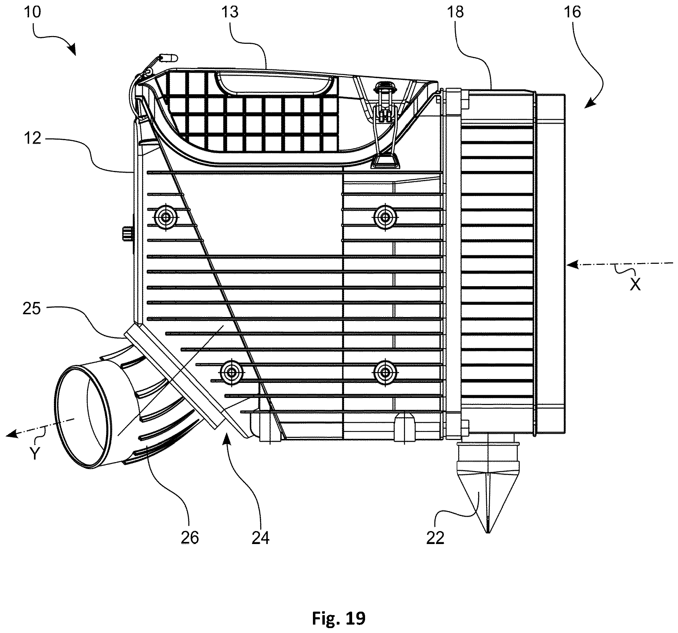

Nach dem Zyklonblock 18 gelangt das zu filternde Fluid in den Hauptfiltereinsatz 100. Der Hauptfiltereinsatz 100 ist vorliegend prismatisch ausgebildet. Eine Anströmfläche 110 des Hauptfiltereinsatzes 100 liegt nicht parallel zu einer Abströmfläche 112 des Hauptfiltereinsatzes 100. Vielmehr schließen die Anströmfläche 110 und die Abströmfläche 112 einen Winkel ein. Vorliegend ist die Anströmfläche 110 des Hauptfiltereinsatzes 100 hinsichtlich ihrer angestrebten Fläche kleiner als die Abströmfläche 112 des Hauptfiltereinsatzes 100. Abströmseitig des Hauptfiltereinsatzes 100 ist in dem Filtergehäuse 12 ein Sekundärfiltereinsatz 200 vorgesehen. Eine Hauptanströmfläche 210 des Sekundärfilterelements 200 ist auf die Abströmfläche 112 des Hauptfiltereinsatzes 100 ausgerichtet und insbesondere parallel zu dieser angeordnet. Eine Abströmfläche 212 ist in dieser Ausführungsform parallel zu der Hauptanströmfläche 210 des Sekundärfiltereinsatzes 200 ausgerichtet. Aufgrund der Neigung der Abströmfläche 112 des Hauptfiltereinsatzes 100 findet bereits bei der Anströmung des Fluids aus dem Hauptfiltereinsatz 100, aber auch bei der Anströmung aus dem Sekundärfiltereinsatz 200 eine Ablenkung der Hauptströmungsrichtung X statt. Durch die Abströmungsgeometrie des Filtergehäuses 12 im Abströmbereich 24 wird das strömende Fluid auf die Abströmungsrichtung Y um- und zu einem Abströmstutzen 26 gelenkt. Vorliegend ist die Hauptabströmungsrichtung Y im Wesentlichen senkrecht zur Hauptanströmungsrichtung X. Es sind aber auch andere Abströmungsrichtungen denkbar. Dies wird insbesondere im Zusammenhang mit den Figuren 15-19 näher erläutert.

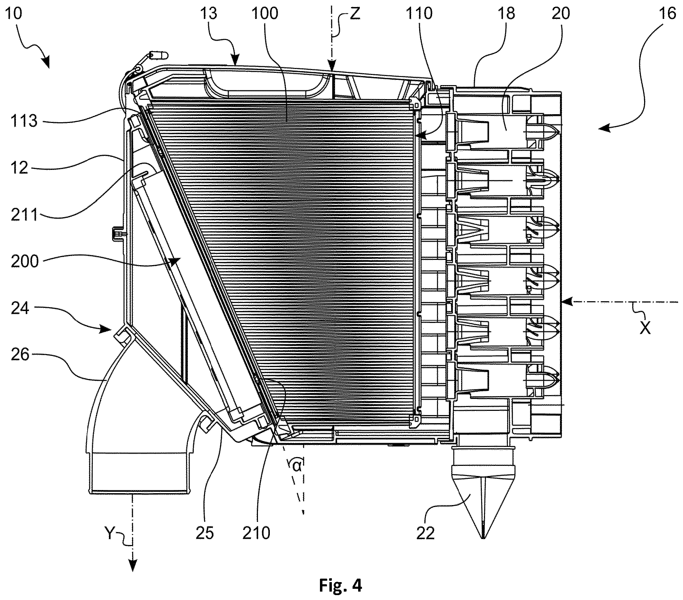

Der Hauptfiltereinsatz 100 weist eine Hauptfiltereinsatz-Anströmfläche 110, eine Hauptfiltereinsatz-Strömungsrichtung X1, eine Hauptfiltereinsatz-Abströmfläche 112 sowie eine auf einer Dichtfläche 114 angeordnete Dichtung 116 zur fluiddichten Trennung des rohseitigen Bereichs 14 und des reinseitigen Bereichs 16 des Filtergehäuses 12 auf. Stromabwärts des Hauptfiltereinsatzes 100 ist ein Sekundärfiltereinsatz 200 mit einer Sekundärfiltereinsatz-Anströmfläche 210, einer Sekundärfiltereinsatz-Strömungsrichtung Y1 und einer Sekundärfiltereinsatz-Abströmfläche 212 angeordnet. Die Dichtfläche 114 des Hauptfiltereinsatzes 100 ist schräg zur Hauptströmungsrichtung Y1 des Hauptfiltereinsatzes 100 angeordnet. Insbesondere ist die Dichtfläche 114 unter einem Winkel α angeordnet, der bevorzugt zwischen 5° und 45° beträgt (siehe Figur 4), Insbesondere beträgt der Winkel 24°±10° und 24°±5°. In der vorliegenden Ausführungsform beträgt der Winkel α 24° (siehe Figur 4).

Die Sekundärfiltereinsatz-Anströmfläche 210 verläuft im Wesentlichen parallel und beabstandet zu der Dichtfläche 114 des Hauptfiltereinsatzes 100. Der Abstand beträgt weniger als 2 cm, in der vorliegenden Ausführungsform beträgt der Abstand 1 cm.

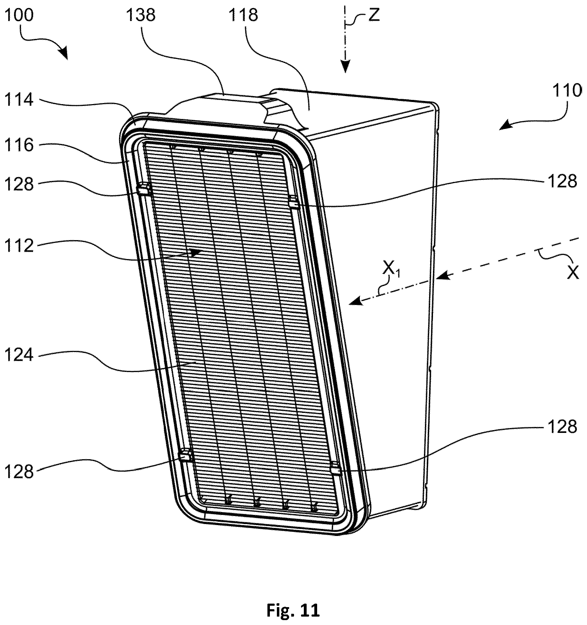

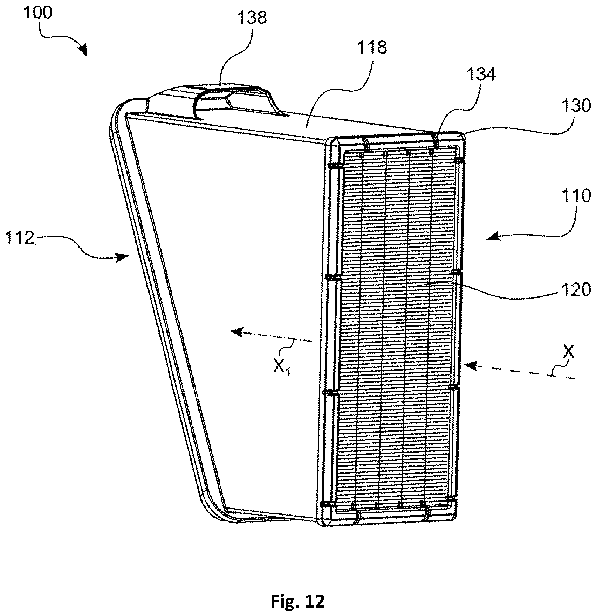

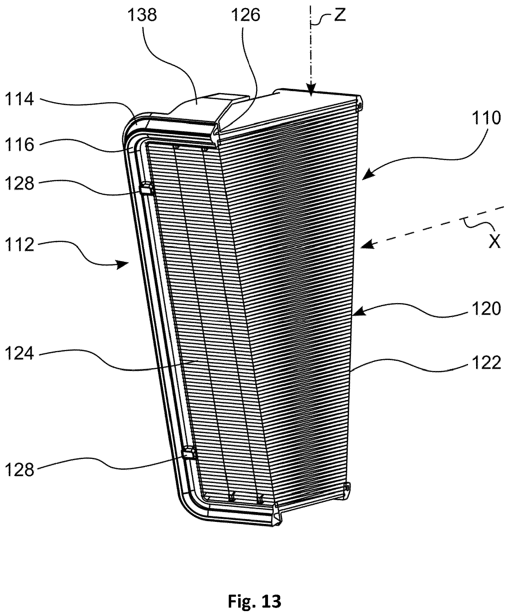

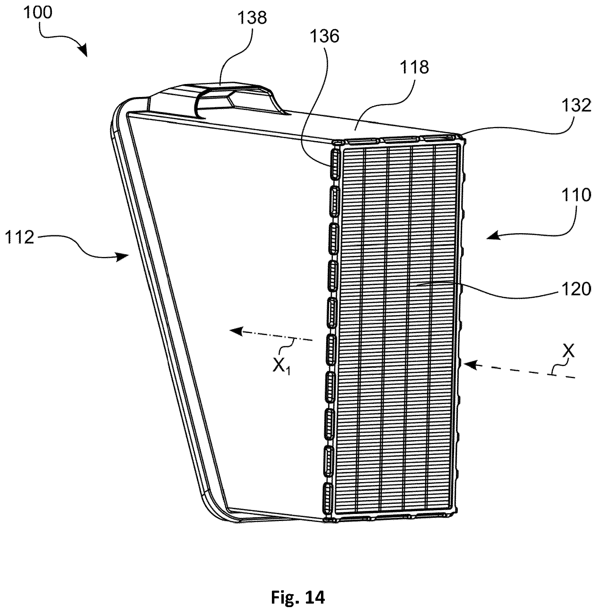

Die Figuren 11-14 zeigen den Hauptfiltereinsatz 100. Der Hauptfiltereinsatz 100 weist eine Anströmfläche 110 und eine Abströmfläche 112 auf. Der Hauptfiltereinsatz 100 wird entlang einer Hauptanströmungsrichtung X angeströmt und entlang einer Hauptdurchströmungsrichtung X1 durchströmt. Der Hauptfiltereinsatz 100 weist einen Filtereinsatzrahmen 118 auf, der einen Filterkörper 120 aufnimmt. Der Filterkörper 120 ist vorliegend als Faltenbalg ausgebildet. Anströmseitige Faltkanten 122 liegen gegenüber abströmseitigen Faltkanten 124. Anströmseitige Faltkanten 122 und abströmseitige Faltkanten 124 liegen parallel, im Wesentlichen senkrecht zur Hauptdurchströmungsrichtung X1 und in den Figuren 11-14 im Wesentlichen waagerecht. Diese Orientierung der Faltkanten 122, 124 erlaubt eine Variation der Faltentiefe in Richtung einer Einführrichtung Z. Entlang der Einführrichtung Z ist der Hauptfiltereinsatz 100 in das Filtergehäuse 12 des Filters 10 einführbar. In dem vorliegenden Ausführungsbeispiel verringert sich die Faltenhöhe entlang der Einführrichtung Z. Dies bewirkt eine Verkippung der Anströmfläche 110 gegenüber der Abströmfläche 112.

Im Bereich der Abströmfläche 110 weist der Filterrahmen 118 eine Dichtfläche 114 auf, entlang der eine umlaufende Dichtung 116 vorgesehen ist. Die Dichtung dient zur Trennung des rohseitigen Bereichs 14 von dem reinseitigen Bereich 16 in dem Filtergehäuse 12 des Filters 10, wenn der Hauptfiltereinsatz 100 in den Filter 10 eingesetzt ist. Die Dichtung 112 weist im Wesentlichen im Querschnitt eine U-Form auf.

Zur Verstärkung und besseren mechanischen Anbindung der Dichtung 116 an den Filterrahmen 118 ist ein Steg 126 vorgesehen, der in die U-Form der Dichtung 116 eingreift. Gleichzeitig kann die Dichtung 116 den Filterkörper 120 kontaktieren oder durchdringen, so dass gleichzeitig eine Verklebung des Filterkörpers 120 mit dem Filtereinsatzrahmen 118 und eine fluiddichte Abdichtung zwischen Filterkörper 120 und Filtereinsatzrahmen 118 entsteht.

Des Weiteren weist die Dichtung 116 eine vorliegend als Abstütznoppen 128 ausgebildete Abstandsstruktur auf. Die Abstütznoppen 128 sind Bestandteil des Dichtungsmaterials der Dichtung 116. Wie aus der Querschnittsansicht der Figur 4 erkennbar ist, kontaktieren die Abstütznoppen 128 den Sekundärfiltereinsatz 200, insbesondere einen Sekundärfiltereinsatzrahmen, wenn Hauptfiltereinsatz 100 und Sekundärfiltereinsatz 200 in dem Filtergehäuse 12 des Filters 10 eingesetzt sind. In diesem Zustand kann sich der Sekundärfiltereinsatz 200 auch bei einer Vibrationsanregung, die beispielsweise durch das Filtergehäuse 12 übertragen werden kann, nicht aus einem Dichtsitz im Filtergehäuse 12 bewegen. Außerdem wird durch die Abstütznoppen 128 sichergestellt, dass der Sekundärfiltereinsatz 200 nach dem Einbau des Hauptfiltereinsatzes 100 und dem Verschließen des Deckels 13 an der richtigen Position im Filtergehäuse 12 sitzt.

Die Abstütznoppen 128 sind mehrfach entlang der Dichtung 116 an der Abströmfläche 112 zugewandten Seite angeordnet. Sie können beispielsweise integral mit der Dichtung 116 bei der Herstellung der Dichtung 116 hergestellt werden.

Die Dichtung 116 befindet sich an der Abströmfläche 112 des Hauptfiltereinsatzes 100 und wirkt in eine Richtung, die senkrecht zur Abströmfläche 112 liegt, also im Wesentlichen axial entlang der Hauptdurchströmungsrichtung X1.

Der Hauptfiltereinsatz 100 weist an seiner Anströmseite 110 einen außen um den Filterrahmen 118 umlaufenden Kantenschutz 130 auf. Der Kantenschutz 130 ist so ausgelegt, dass bei einem Ausklopfen des Hauptfiltereinsatzes 100, beispielsweise zum Abreinigen, Schläge gegen den Filterrahmen 118 aufgenommen und zumindest teilweise abgefedert werden können. So kann ein Brechen des Filterrahmens 118 oder eine anderweitige Beschädigung des Filtereinsatzes 100, beispielsweise des Filterkörpers 120, vermieden werden. Der Kantenschutz 130 läuft um die anströmseitige Kante des Filterelements 118 herum. Dabei können einzelne Unterbrechungen, wie beispielsweise die Einkerbungen 134 vorgesehen sein. Die Einkerbungen 134 entstehen bei der Herstellung des Kantenschutzes 130. Dabei liegt der Filterrahmen 118 samt Filterkörper 120 in einer Gussschale. Stege halten dabei einen Abstand zwischen dem Gussschalenboden und dem Filterkörper 118 und lassen dabei die Einkerbungen 134 während des Gussvorgangs entstehen.

An der anströmseitigen Kante 132 sind Ausnehmungen 136 vorgesehen. Die Ausnehmungen 136 durchbrechen die Seitenwände des Filterrahmens 118 und erstrecken sich somit senkrecht zur Hauptdurchströmungsrichtung X1. Während des bereits erwähnten Gussvorgangs durchdringt das Gussmaterial für den Kantenschutz 130 die Ausnehmungen 136, kontaktiert die Innenwände des Filtereinsatzrahmens 118 und insbesondere den Filterkörper 120. Es entsteht damit eine fluiddichte Abdichtung zwischen dem Filterkörper 120 und dem Filtereinsatzrahmen 118 und gleichzeitig eine Verklebung der beiden Bauteile. Es ist somit der Kantenschutz 130 einteilig mit der Verklebung zwischen Filterkörper 120 und Filtereinsatzrahmen 118 und einer ebenfalls notwendigen Abdichtung zwischen den beiden Bauteilen hergestellt. Der Kantenschutz 130 kann beispielsweise aus einem schäumbaren Polyurethan hergestellt sein. Es sind aber auch silikonbasierte Materialsysteme denkbar.

Der Filtereinsatz 100 weist einen Griff 138 auf. Der Griff 138 wirkt mit dem Deckel 13 des Filters 10 zusammen und sorgt für einen sicheren Sitz des Hauptfiltereinsatzes 100 in dem Filtergehäuse 12 und übt gleichzeitig einen axial in Richtung der Hauptströmungsrichtung X1 gerichteten Druck auf die Dichtung 116 aus und sorgt somit für einen festen Dichtsitz des Hauptfiltereinsatzes 100 in dem Filtergehäuse 12.

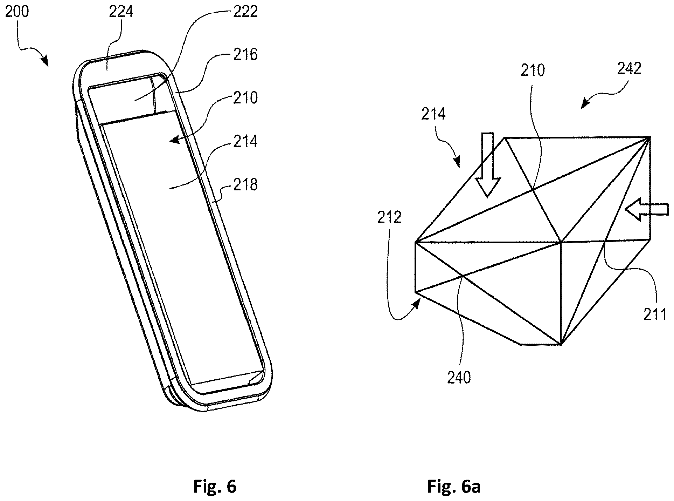

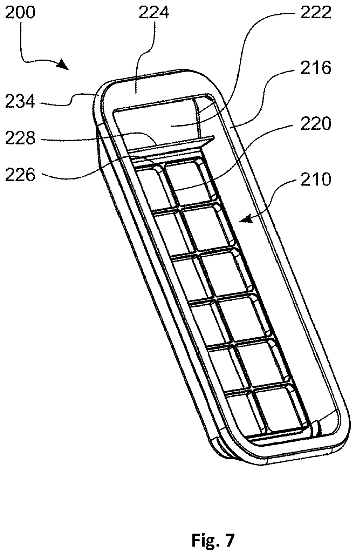

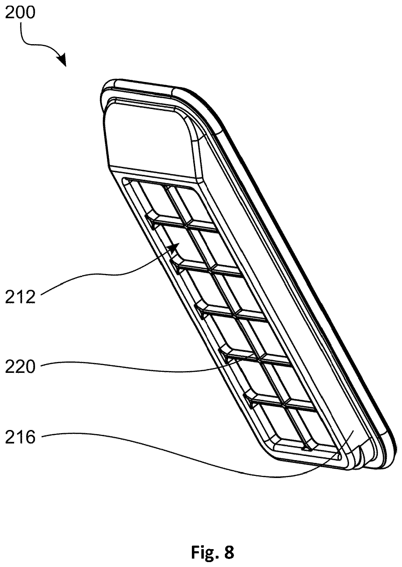

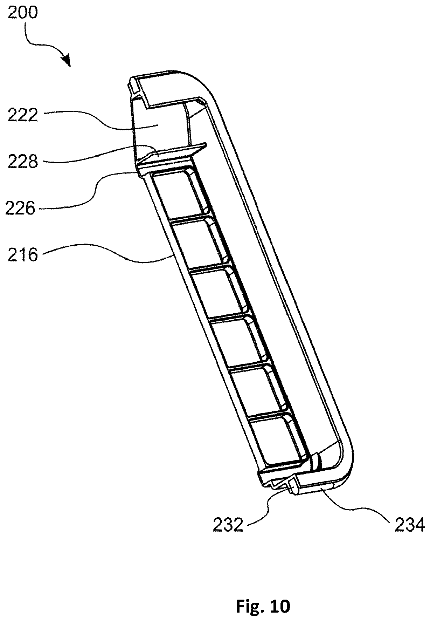

Die Figuren 6-10 zeigen eine Ausführungsform eines Sekundärfiltereinsatzes 200. Der Sekundärfiltereinsatz 200 weist eine Hauptanströmfläche 210, eine Abströmfläche 212 sowie eine Hauptdurchströmungsrichtung Y1 auf. Ferner weist der Sekundärfiltereinsatz 200 einen Filterkörper 214 auf, der von einem Filtereinsatzrahmen 216 getragen wird. Anströmseitig schließt der Filtereinsatzrahmen 216 mit einem um den Filterkörper 214 umlaufenden Rahmenbereich 218 im Wesentlichen bündig mit dem Filterkörper 214 ab. Der Rahmenbereich 218 kann beispielsweise als Widerlager für die Abstütznoppen 128 des Hauptfiltereinsatzes 100 im eingesetzten Zustand beider Filtereinsätze 100, 200 dienen.

In der vorliegenden Ausführungsform ist der Filterkörper 214 im Wesentlichen quaderförmig. Es sind aber auch andere Grundformen wie etwa ein Prisma denkbar. Abströmseitig, also im Bereich der Abströmfläche 212, ist der Filtereinsatzrahmen 216 mit einer Gitterstruktur 220 versehen. Die Gitterstruktur 220 überdeckt die Abströmfläche 212 zumindest teilweise. Bei einem hohen Differenzdruck zwischen der Anströmseite 210 und der Abströmseite 212 verhindert die Gitterstruktur 220 ein unerwünschtes Durchbiegen oder gar Durchfallen des Filterkörpers 214.

An einer Schmalseite des quaderförmigen Filterkörpers 214 ist der Filtereinsatzrahmen 216 mit einer Griffmulde 222 versehen. Um ein bequemes Greifen in der Griffmulde 222 für die Hand einer Person zu ermöglichen, die den Sekundärfiltereinsatz 200 wechseln möchte, ist der Rahmenbereich 218 im Bereich der Griffmulde 222 zu einem Griffsteg 224 verbreitert. Die Breite des Griffstegs 224 ist dabei so gewählt, dass ein direktes Anströmen eines die Hauptfiltereinsatz-Abströmfläche 112 verlassendes Fluid zu dem Filterkörper 214 insbesondere an der der Griffmulde 222 zugewandten Seite möglich ist. Dies ist insbesondere auch aus der Querschnittsansicht der Figur 4 gut erkennbar. Auch von der obersten Kante 113 der Hauptfilterelement-Abströmfläche 112 kann ein austretendes Fluids direkt zu dem Filterkörper 214 des Sekundärfiltereinsatzes 200 strömen. Dabei kann das Fluid insbesondere über die Nebenanströmfläche 211 in den Filterkörper 214 eintreten.

In diesem Ausführungsbeispiel ist der Filterkörper 214 als Filterbalg ausgebildet. Die Faltkanten verlaufen dabei parallel zu der Längsachse des Sekundärfiltereinsatzes 200, so dass die Stirnseiten der Falten die Nebenanströmfläche 211 bilden. Die Faltkanten der Falten bilden die Hauptanströmfläche 210 und die Abströmfläche 212. Durch die Kombination aus Griffmulde 222 und über die Nebenanströmfläche 211 seitlich anströmbarem Filterbalg 214 können die Druckverluste an dem Sekundärfiltereinsatz 200 verringert werden, da der Sekundärfiltereinsatz 200 deutlich besser an die Strömungsführung von dem Hauptfiltereinsatz 100 zu dem Abströmstutzen in dem Filtergehäuse 12 angepasst ist. Gleichzeitig erhöht die Gitterstruktur 220 an der Abströmseite 212 die Kollapsfestigkeit des Sekundärfiltereinsatzes 200. Ferner ist über den integrierten Griff an der Griffmulde 222 eine leichte Demontage des Filtereinsatzes 200 möglich.

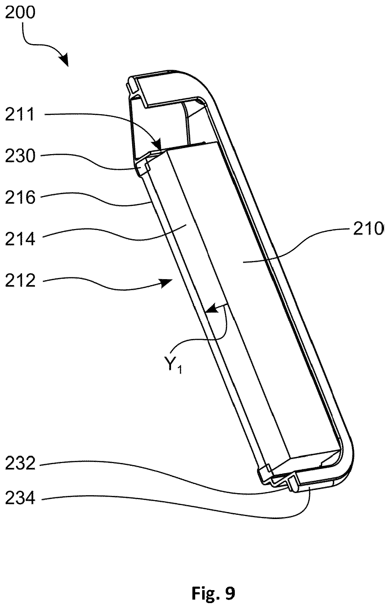

Der Sekundärfiltereinsatz 200 weist einen Filterrahmen 216 auf, der umlaufend um den abströmseitigen Rand des Filterkörpers 214 eine Nut 226 vorsieht. Gleichzeitig ist an der der Griffmulde 222 zugewandten Seite des Filtereinsatzrahmens 216 ein Steg 228 vorgesehen. Die Nut 226 dient als Gussform für eine umlaufende Verklebung und Abdichtung des Filterkörpers 214 mit dem Filtereinsatzrahmen 216. Die Abdichtung und Verklebung wird durch ein Dichtungsmaterial 230 (siehe Figur 9) bewirkt. Das Dichtungsmaterial 230 kann beispielsweise ein schäumendes Polyurethan sein. Es sind aber auch silikonbasierte Materialsysteme denkbar.

Die Nut 226 und zusätzlich der Steg 228 sorgen für eine gute mechanische Ankopplung des Dichtungsmaterials 230 an den Filtereinsatzrahmen 216. Diese Ausgestaltung hat zudem den Vorteil, dass nach dem Einbringen des Dichtungsmaterials 230 in die Nut 226 und dem Einlegen des Filterkörpers 214 in den Filtereinsatzrahmen 216 und einem nachfolgenden Aufschäumen und Aushärten keine weiteren Bearbeitungsschritte wie etwa ein Beschneiden des Dichtungsmaterials 230 notwendig sind. Überschüssiges Material kann teilweise von Filterkörper 214 aufgenommen werden oder in den Zwischenbereich zwischen Filterkörper 214 und Filtereinsatzrahmen 216 gelangen, ohne dass dies nachteilig wäre.

Die Tiefe der Nut 226 verläuft im Wesentlichen entlang der Hauptdurchströmungsrichtung Y1 des Sekundärfiltereinsatzes 200. Die abströmseitige Gitterstruktur 222 kann einteilig mit dem Filtereinsatzrahmen 216 ausgebildet sein.

An seinem anströmseitigen Umfang weist der Filtereinsatzrahmen 216 eine Dichtungsaufnahmenut 232 auf. In diese Dichtungsaufnahmenut 232 kann eine beispielsweise aus einem Moosgummi hergestellte Dichtung 234 eingelegt werden. Die Dichtung 234 wirkt somit radial, d.h. senkrecht zur Hauptdurchströmungsrichtung Y1 des Sekundärfiltereinsatzes 200.

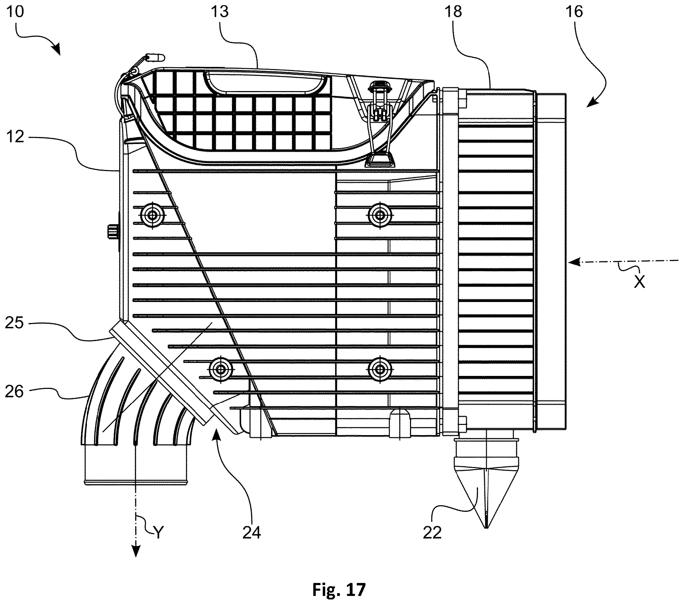

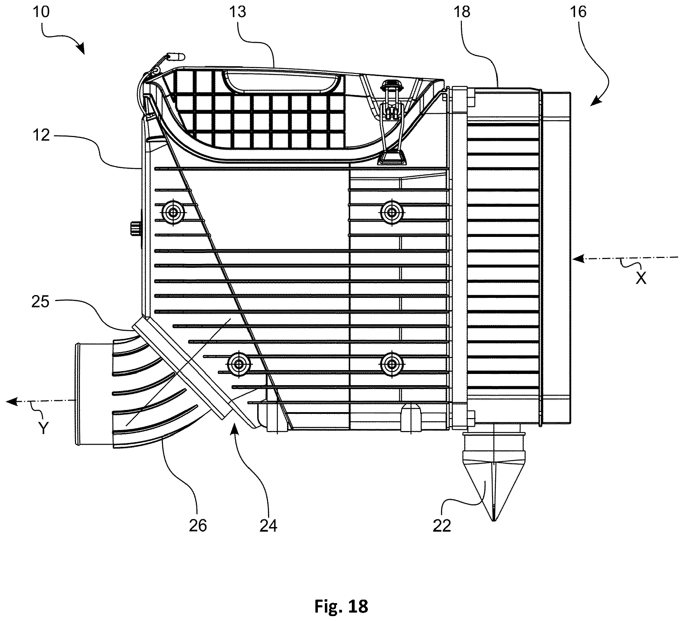

Die Figuren 15-19 zeigen den Filter 10 mit verschiedenen Orientierungen der des Abströmstutzens 26. Das Filtergehäuse 12 des Filters 10 weist im Abströmbereich 24 einen Befestigungsbereich 25 auf. Der Befestigungsbereich 25 schließt mit der Hauptanströmrichtung X des Filtergehäuses 12 einen Winkel von ungefähr 45° ein. An den Befestigungsbereich 25 ist der Abströmstutzen 26 befestigbar. Der Abströmstutzen 26 ist so geformt, dass ein durch den Abströmstutzen 26 strömendes Fluid eine Umlenkung von 45° erfährt. Der Abströmstutzen 46 ist vor einem endgültigen Befestigen an der Befestigungsfläche 25 drehbar ansetzbar. Es kann somit erst zu einem sehr späten Zeitpunkt bei der Herstellung des Filters 10 die endgültige Umlenkungsrichtung bzw. Abströmrichtung Y des Filters 10 festgelegt werden. Bei der in dieser Ausführungsform gezeigten Geometrie sind eine Inline-Durchströmung (Figuren 15, 18), eine Umlenkung um 90° (Figur 17) sowie dazwischenliegende Winkelbereiche möglich. Bei den zwischen den extremen Winkeln liegenden Winkelbereichen erfolgt zusätzlich eine seitliche Ablenkung.

## Patentansprüche

1. Filtereinsatz, insbesondere Sekundärfiltereinsatz (200), für einen Filter (10) zur Filterung eines Fluids, insbesondere von Luft, insbesondere für eine Brennkraftmaschine, wobei der Filtereinsatz (2) dazu ausgelegt ist, stromabwärts eines Hauptfiltereinsatzes (100) in einem Filter (10) eingesetzt zu werden, mit einer Anströmfläche (210), einer Abströmfläche (212) und einer Hauptströmungsrichtung (Y1), einem Filterkörper (214), der entlang der Hauptströmungsrichtung (Y1) durchströmbar ist, einem den Filterkörper (214) tragenden Filtereinsatzrahmen (216), wobei der Filtereinsatzrahmen (216) eine Dichtung (234) zur Trennung eines Filterinnenraums eines Filters (10) in Reinseite und Rohseite und eine Verklebung (230) zwischen dem Filterkörper (214) und dem Filtereinsatzrahmen (216) aufweist, wobei ein Trägerabschnitt (226) des Filtereinsatzrahmens (216) um den Filterkörper (214) umläuft, **dadurch gekennzeichnet, dass** der Trägerabschnitt an der Innenseite eine Nut (226) aufweist, die ein Klebematerials (230) der Verklebung aufnimmt, wobei die Tiefe der Nut (226) in Richtung der Hauptströmungsrichtung (Y1) verläuft.

2. Filtereinsatz nach Anspruch 1, wobei die Dichtung (234) radial zur Hauptströmungsrichtung (Y1) wirkend ausgelegt und insbesondere im Wesentlichen senkrecht zur Hauptströmungsrichtung (Y1) um den Filtereinsatz (200) umläuft.

3. Filtereinsatz nach einem der vorherigen Ansprüche, wobei ein Dichtungsaufnahmeabschnitt (232) des Filtereinsatzrahmens (216) außen um den Filterkörper (214) umläuft.

4. Filtereinsatz nach einem der vorherigen Ansprüche, wobei die Verklebung (230) ein Polyurethan aufweist und insbesondere geschäumt ist.

5. Filtereinsatz nach einem der vorherigen Ansprüche, wobei die Verklebung (230) den Filterkörper (214) teilweise durchdringt.

6. Filtereinsatz nach einem der vorherigen Ansprüche, wobei die Dichtung (234) ein Moosgummi aufweist.

7. Filtereinsatz nach einem der vorherigen Ansprüche, wobei der Filtereinsatzrahmen (216) abströmseitig ein die Abströmfläche (212) überdeckendes Gitter (220) aufweist.

8. Filtereinsatz nach Anspruch 7, wobei das Gitter (220) einteilig mit dem Filtereinsatzrahmen (216) ausgebildet ist.

9. Filtereinsatz (200) nach einem der vorherigen Ansprüche, wobei der Filtereinsatzrahmen (216) einen Griffbereich (222) aufweist, wobei der Griffbereich (222) so ausgelegt ist, dass ein Anströmen des Filterkörpers (214) über den Griffbereich (222) und eine manuelle Entnahme des Filtereinsatzes (200) möglich ist.

10. Filtereinsatz nach einem der vorherigen Ansprüche, wobei seitlich zu der Hauptanströmfläche (210) eine Nebenanströmfläche (211) vorgesehen ist.

11. Filtereinsatz nach einem der Ansprüche 9 oder 10, wobei der Griffbereich (222) ein Anströmen des Filterkörpers (214) seitlich neben der Hauptanströmfläche (210) ermöglicht.

12. Filtereinsatz nach einem der vorherigen Ansprüche 9 - 11, wobei der Griffbereich als Griffmulde (222) ausgebildet ist und die Griffmulde (222) zu dem Filterkörper (214) zeigt.

13. Filtereinsatz nach einem der vorherigen Ansprüche 9 - 12, wobei in Hauptströmungsrichtung (Y1) der Griffbereich (222) im Wesentlichen nicht über die Hauptanströmfläche (210) hinaus ragt.

14. Filtereinsatz nach einem der vorherigen Ansprüche, wobei der Filterkörper (214) im Wesentlichen quaderförmig ist.

15. Filtereinsatz nach einem der vorherigen Ansprüche, wobei der Filterkörper (214) als Filterbalg ausgebildet ist und insbesondere die Stirnseiten der Filterbalgfalten in Richtung des Griffbereichs (222) zeigen.

## Claims

1. Filter insert, in particular secondary filter insert (200), for a filter (10) for filtering a fluid, in particular air, in particular for an internal combustion engine, wherein the filter insert (2) is designed to be inserted into a filter (10) downstream of a main filter insert (100), having an inflow surface (210), an outflow surface (212) and a main flow direction (Y1), a filter body (214) which can be flowed through along the main flow direction (Y1), a filter insert frame (216) supporting the filter body (214), wherein the filter insert frame (216) features a seal (234) for separating a filter interior of a filter (10) into a clean side and a raw side and an adhesive bond (230) between the filter body (214) and the filter insert frame (216), wherein a support portion (226) of the filter insert frame (216) surrounds the filter body (214), **characterized in that** the support portion features a groove (226) on the interior side for receiving an adhesive material (230) of the adhesive bond, wherein the depth of the groove (226) extends in the direction of the main flow direction (Y1).

2. Filter insert according to claim 1, wherein the seal (234) is designed to act radially to the main flow direction (Y1) and in particular surrounds the filter insert (200) substantially perpendicular to the main flow direction (Y1).

3. Filter insert according to one of the preceding claims, wherein a seal receiving section (232) of the filter insert frame (216) externally surrounds the filter body (214).

4. Filter insert according to one of the preceding claims, wherein the adhesive bond (230) features a polyurethane and is in particular foamed.

5. Filter insert according to one of the preceding claims, wherein the adhesive bond (230) partially penetrates the filter body (214).

6. Filter insert according to one of the preceding claims, wherein the seal (234) features a sponge piping.

7. Filter insert according to one of the preceding claims, wherein the filter insert frame (216) features a grating (220) on the outflow side covering the outflow surface (212).

8. Filter insert according to claim 7, wherein the grating (220) is formed integrally with the filter insert frame (216).

9. Filter insert (200) according to one of the preceding claims, wherein the filter insert frame (216) features a grip area (222), wherein the grip area (222) is designed to allow inflow of the filter body (214) via the grip area (222) and manual removal of the filter insert (200).

10. Filter insert according to one of the preceding claims, wherein a secondary inflow surface (211) is provided laterally to the main inflow surface (210).

11. Filter insert according to one of the claims 9 or 10, wherein the grip area (222) enables inflow of the filter body (214) laterally adjacent to the main inflow surface (210).

12. Filter insert according to one of the preceding claims 9 to 11, wherein the grip area is designed as a grip recess (222) and the grip recess (222) points towards the filter body (214).

13. Filter insert according to one of the preceding claims 9 to 12, wherein the grip area (222) does not substantially project beyond the main inflow surface (210) in the main flow direction (Y1).

14. Filter insert according to one of the preceding claims, wherein the filter body (214) is substantially cuboid-shaped.

15. Filter insert according to one of the preceding claims, wherein the filter body (214) is designed as a filter bellows and in particular the front faces of the filter bellows folds point towards the grip area (222).

## Revendications

1. Cartouche filtrante, notamment cartouche filtrante secondaire (200), pour un filtre (10) pour filtrer un fluide, notamment de l'air, notamment pour un moteur à combustion interne, la cartouche filtrante (2) étant conçue pour être insérée en aval d'une cartouche filtrante principale (100) dans un filtre (10), ayant une surface d'afflux (210), une surface d'écoulement (212) et un sens d'écoulement principal (Y1), un corps de filtre (214) pouvant être traversé le long du sens de flux principal (Y1), un cadre de la cartouche filtrante (216) supportant le corps de filtre (214), le cadre de la cartouche filtrante (216) présentant un joint d'étanchéité (234) pour séparer un intérieur de filtre d'un filtre (10) en un côté pur et un côté brut, et une liaison adhésive (230) entre le corps de filtre (214) et le cadre de la cartouche filtrante (216), un segment de support (226) du cadre de la cartouche filtrante (216) entourant le corps de filtre (214), **caractérisée en ce que** et le segment de support présente sur sa face intérieure une rainure (226) servant à réceptionner un matériau adhésif (230) de la surface collée, la profondeur de la rainure (226) évoluant en direction du sens de flux principal (Y1).

2. Cartouche filtrante selon la revendication 1, le joint d'étanchéité (234) ayant un effet radial par rapport au sens de flux principal (Y1) et entourant la cartouche filtrante (200) notamment essentiellement de manière verticale par rapport au sens de flux principal (Y1).

3. Cartouche filtrante selon l'une quelconque des revendications précédentes, une section de réception de joint (232) du cadre de la cartouche filtrante (216) entourant le corps de filtre (214) à l'extérieur.

4. Cartouche filtrante selon l'une quelconque des revendications précédentes, la surface collée (230) présentant un polyuréthane et étant notamment moulée par expansion.

5. Cartouche filtrante selon l'une quelconque des revendications précédentes, la surface collée (230) pénétrant le corps de filtre (214) partiellement.

6. Cartouche filtrante selon l'une quelconque des revendications précédentes, le joint d'étanchéité (234) présentant un caoutchouc mousse.

7. Cartouche filtrante selon l'une quelconque des revendications précédentes, le cadre de la cartouche filtrante (216) présentant du côté de l'écoulement une grille (220) qui recouvre la surface d'écoulement (212).

8. Cartouche filtrante selon la revendication 7, la grille (220) étant réalisée d'un seul tenant avec le cadre de la cartouche filtrante (216).

9. Cartouche filtrante (200) selon l'une quelconque des revendications précédentes, le cadre de la cartouche filtrante (216) présentant une zone de préhension (222), la zone de préhension (222) étant conçue pour permettre un afflux du corps de filtre (214) par l'intermédiaire de la zone de préhension (222) et un prélèvement manuel de la cartouche filtrante (200).

10. Cartouche filtrante selon l'une quelconque des revendications précédentes, une surface d'afflux secondaire (211) étant prévue latéralement par rapport à la surface d'afflux principale (210).

11. Cartouche filtrante selon l'une quelconque des revendications 9 ou 10, la zone de préhension (222) permettant un afflux du corps de filtre (214) latéralement à côté de la surface d'afflux principale (210).

12. Cartouche filtrante selon l'une quelconque des revendications précédentes 9 à 11, la zone de préhension étant conçue en tant que creux de préhension (222) et le creux de préhension (222) pointant vers le corps de filtre (214).

13. Cartouche filtrante selon l'une quelconque des revendications précédentes 9 à 12, la zone de préhension (222) ne dépassant pas essentiellement de la surface d'afflux principale (210) dans le sens de flux principal (Y1).

14. Cartouche filtrante selon l'une quelconque des revendications précédentes, le corps de filtre (214) ayant essentiellement une forme parallélépipédique.

15. Cartouche filtrante selon l'une quelconque des revendications précédentes, le corps de filtre (214) étant réalisé en tant que soufflet de filtre et notamment les faces frontales des plis du soufflet de filtre pointant vers la zone de préhension (222).
